# EUROPEAN PATENT APPLICATION

(11) **EP 4 815 322 A1**
(43) Date of publication of application: **30.09.2026**
(21) Application number: 26168670.3
(22) Date of filing: 27.03.2026
(51) Int. Cl.: H04B 7/0456, H04B 7/10, H04B 7/185, H04B 10/118

(54) **WIRELESS DATA COMMUNICATION USING POLARIZATION INFORMATION**

(30) Priority: 28.03.2025 US 202519093641
(71) Applicant: T-Mobile Innovations LLC, Bellevue, WA 98006 (US)
(72) Inventor: AU, Chad Chun Fai, Bellevue, 98006 (US)
(74) Representative: Suddaby, Mark Edward

(57) **Abstract**

In some examples, a wireless communication system comprises a wireless transmitter and a wireless receiver. The wireless transmitter transmits a wireless communication signal over a wireless communication link to the wireless receiver. The wireless receiver receives the wireless communication signal over the wireless communication link from the wireless receiver. The wireless receiver determines link information for the wireless communication link based on the wireless communication signal. The wireless receiver determines polarization information for the wireless receiver. The wireless receiver wirelessly transfers the link information and the polarization information to the wireless transmitter. The wireless transmitter wirelessly receives the link information and the polarization information from the wireless receiver. The wireless transmitter transmits a subsequent wireless communication signal over the wireless communication link to the wireless receiver based on the link information and the polarization information.

## Description

### TECHNICAL BACKGROUND

Wireless data systems provide wireless data services to user devices like phones, vehicles, robots, and computers. The data services include internet-access, machine-communications, media-streaming, or some other data product. For example, a fleet of aerial vehicles may use a wireless communication network for vehicle tracking and control. In another example, a team of gamers may use wireless internet access to play an interactive augmented-reality game. The wireless data systems comprise wireless transmitters and wireless receivers. The wireless transmitters and receivers use antenna structures to transmit and receive wireless communication signals that carry the user data for these wireless data services.

The antenna structures may be dipoles, patches, arrays, or some other type of electromagnetic medium. One of the characteristics of the antenna structures is polarization. Polarization comprises the geometrical orientation of the oscillations of the wireless communication signals. The polarization is typically controlled by the configuration of the antenna structure. For example, a dipole antenna that is perpendicular to the earth's surface emits wireless communication signals that oscillate vertically relative to the earth's surface and have a linear vertical polarization. Another dipole antenna that is parallel to the earth's surface emits wireless communication signals that oscillate horizontally relative to the earth's surface and have a linear horizontal polarization.

Some antenna structures use a circular or elliptical polarization. The polarization of these wireless communication signals rotates during signal propagation. A clockwise rotation as seen from the wireless transmitter is referred to as right-hand circular polarization. A counter-clockwise rotation as seen from the wireless transmitter is referred to as left-hand circular polarization. A circularly polarized signal may be generated using a pair of perpendicular dipole antennas that form a cross. The dipole elements are energized in a sequence around the cross to emit wireless communication signals that have a corresponding rotating polarization. Patch antennas and antenna arrays may also be energized in a similar rotating manner to generate circularly or elliptically polarized signals.

Some antenna arrays comprise a grid of antenna elements that could each be a dipole. Two dipoles are often configured in an "X" shape to be orthogonal, and a grid of these X-shaped dipoles forms the array. For example, four columns and eight rows of the X-shaped dipoles form a 64-by-64 element grid. Beamforming is accomplished by individually controlling the phase and amplitude of the wireless signals emitted from each dipole.

Some antenna structures feature variable polarization. A variable polarized antenna structure is energized and/or physically configured to change from one polarization to another. The changes in polarization may happen in rapid succession and may be implemented very quickly. For example, the polarization of the wireless signals emitted from an antenna array may be continually and rapidly changed by modifying the energy and phase of the individual electronic signals that drive each antenna element in an array. In another example, switching from a clockwise rotation to a counter-clockwise rotation of a of a crossed dipole switches its circular polarization from right-hand to left-hand.

A wireless signal is poorly received when the polarization of the wireless receiver does not correspond to the polarization of the wireless signal that arrives at the receiver. For example, a vertically-polarized signal arriving at a vertically polarized dipole will be optimally received since the incident wave is aligned with the antenna structure and more of the oscillating wireless signal strikes the vertical dipole. In contrast, a vertically-polarized signal arriving at a horizontally-polarized dipole will be poorly received since the incident wave is not aligned with the antenna structure and little of the oscillating wireless signal strikes the horizontal dipole. In a like manner, a right-hand circularly polarized signal is optimally received by a right-hand circularly polarized receiver, but the right-hand circularly polarized signal is poorly received by a left-hand circularly polarized receiver.

The polarization mismatch between transmitter and receiver may be caused by a wireless transmitter that uses a different polarization than the wireless receiver. The polarization mismatch may also be caused when the wireless signal changes polarization while propagating between the wireless transmitter and the wireless receiver. For example, a wireless signal may reflect off of a building in between the wireless transmitter and the wireless receiver where the reflected signal has a new polarization that does not match the polarization of the wireless receiver. In multi-path systems, several versions of a wireless signal are received and processed. Some of these versions may reflect in various ways to reach the wireless receiver at sub-optimal polarizations. Unfortunately, the best versions of the arriving multipath signal may have polarizations that no longer correspond to the polarization of the wireless receiver.

### TECHNICAL OVERVIEW

In some examples, a wireless communication system comprises a wireless transmitter and a wireless receiver. The wireless transmitter transmits a wireless communication signal over a wireless communication link to the wireless receiver. The wireless receiver receives the wireless communication signal over the wireless communication link from the wireless transmitter. The wireless receiver determines link information for the wireless communication link based on the wireless communication signal. The wireless receiver determines polarization information for the wireless receiver. The wireless receiver wirelessly transfers the link information and the polarization information to the wireless transmitter. The wireless transmitter wirelessly receives the link information and the polarization information from the wireless receiver. The wireless transmitter transmits a subsequent wireless communication signal over the wireless communication link to the wireless receiver based on the link information and the polarization information.

In some examples, a method comprises the following operations. Wirelessly receive a wireless communication signal from a wireless transmitter over a wireless communication link into an antenna structure. Determine link information for the wireless communication link based on the wireless communication signal. Determine polarization information for the antenna structure based on the wireless communication signal. Wirelessly transfer the link information and the polarization information to the wireless transmitter. The wireless transmitter uses link information and the polarization information to wirelessly transmit a subsequent wireless communication signal over the wireless communication link to the antenna structure.

In some examples, a method comprises the following operations. Determine a physical orientation of a wireless communication device relative to a communication satellite in earth orbit. Select a type of polarization based on the physical orientation of the wireless communication device relative to the communication satellite in the earth orbit. Receive a wireless communication signal from the communication satellite in earth orbit into the wireless communication device using the selected type of polarization.

### DESCRIPTION OF THE DRAWINGS

Figure 1 illustrates an exemplary data system to wirelessly communicate based on polarization information.
Figure 2 comprises a flow diagram that illustrates an exemplary operation of the data system to wirelessly communicate based on the polarization information.
Figure 3 comprises a message sequence diagram that illustrates an exemplary operation of the data system to wirelessly communicate based on the polarization information.
Figure 4 illustrates an exemplary wireless data system that comprises a user communication device that controls polarization to wirelessly receive a satellite communication.
Figure 5 illustrates an exemplary wireless communication network to control polarization based on polarization information in Channel State Information (CSI).
Figure 6 illustrates an exemplary User Equipment (UE) in the wireless communication network that controls polarization by including the polarization information in the CSI.
Figure 7 illustrates an exemplary terrestrial 5GNR AN in the wireless communication network that controls polarization based on the polarization information in the CSI.
Figure 8 illustrates an exemplary Wireless Fidelity (WIFI) AN in the wireless communication network that controls polarization based on the polarization information.
Figure 9 illustrates an exemplary Satellite (SAT) AN and SAT Ground Station (GND) in the wireless communication network that controls polarization based on the polarization information.
Figure 10 illustrates an exemplary Network Function Virtualization Infrastructure (NFVI) in the wireless communication network that controls polarization by including the polarization information in the CSI.
Figure 11 illustrates an exemplary operation of the wireless communication network to control polarization by including the polarization information in the CSI.
Figure 12 illustrates exemplary processing circuitry to control polarization using polarization information.

### DETAILED DESCRIPTION

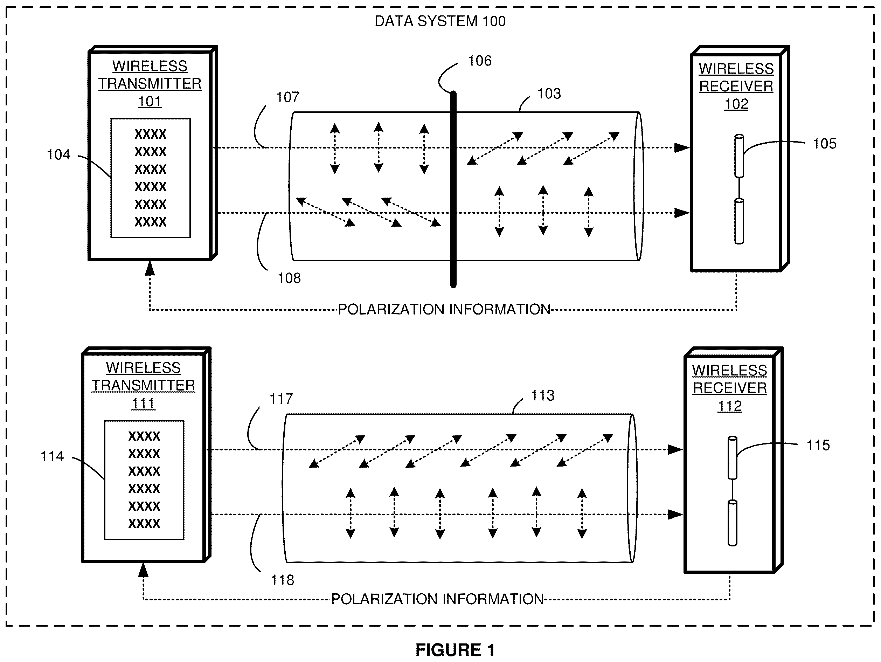

Figure 1 illustrates exemplary data system 100 to wirelessly communicate based on polarization information. Data system 100 comprises wireless transmitters 101 and 111, wireless receivers 102 and 112, wireless link 103, and obstruction 106. Wireless transmitter 101 comprises antenna structure 104, and wireless transmitter 111 comprises antenna structure 114. Wireless receiver 102 comprises antenna structure 105, and wireless receiver 112 comprises antenna structure 115. Antenna structures 104 and 114 are depicted as arrays but other antenna designs could be used. Antenna structures 105 and 115 are depicted as vertical dipoles but other antenna designs could be used. Wireless transmitters and receivers 101-102 and 111-112 could be phones, vehicles, robots, access nodes, communication satellites, and/or some other data apparatus with wireless communication components. The wireless signals could be radio signals, free-space optical signals, modulated vector field carriers, or some other type of electromagnetic radiation. Modulated vector field carriers use carrier waves to modulate vector fields - typically for motor control or signal processing.

In wireless transmitter 101, antenna structure 104 wirelessly transmits wireless signal 107 to antenna structure 105 in wireless receiver 102 over wireless link 103. Initially, wireless signal 107 is vertically polarized (as indicated by the vertical arrows), but object 106 changes this polarization (as indicated by the slanted arrows). Object 106 could be a building, hill, storm, or some other obstruction. Antenna structure 105 is vertically polarized and receives wireless signal 107 with a polarization mismatch, so some user data may be lost. Wireless receiver 102 determines the polarization mismatch and transfers polarization information to wireless transmitter 101 that indicates the polarization mismatch. For example, wireless receiver 102 may determine an angle between the polarization of arriving wireless signal 107 and the polarization of wireless receiver 102, and wireless receiver 102 may transmit the mismatch angle to wireless transmitter 101. Wireless transmitter 101 energizes antenna structure 104 to emit wireless signal 108 that has a new polarization (as indicated by the slanted arrows). Object 106 changes this new polarization to a vertical polarization (as indicated by the vertical arrows). For example, wireless transmitter 101 may offset the vertical polarization of wireless signal 108 by the mismatch angle so object 106 reflects wireless signal 108 having a vertical polarization. Antenna structure 105 receives wireless signal 108 with a polarization match and all user data should be recovered.

In wireless transmitter 111, antenna structure 114 wirelessly transmits wireless signal 117 to antenna structure 115 in wireless receiver 112 over wireless link 113. Wireless signal 117 is not vertically polarized (as indicated by the slanted arrows). Antenna structure 115 is vertically polarized and receives wireless signal 117 with a polarization mismatch, so some user data may be lost. Wireless receiver 112 determines the polarization mismatch and transfers polarization information to wireless transmitter 111 that indicates the polarization mismatch. For example, wireless receiver 112 may determine that it is vertically polarized and indicate the vertical polarization to wireless transmitter 111. Wireless transmitter 111 energizes antenna structure 114 to emit wireless signal 118 that has a vertical polarization (as indicated by the vertical arrows). Antenna structure 115 receives wireless signal 118 with a polarization match and all user data should be recovered.

Wireless receiver 102 determines polarization information that indicates the polarization mismatch at antenna structure 105 by degrees, rotation, or some other factor. The polarization information may indicate a physical orientation of the antenna structure 105 relative to the earth's surface and/or wireless transmitter 101. For example, the polarization information may indicate an angle and geographic-facing direction formed by antenna structure 105 and the earth's surface. Wireless transmitter 101 uses the polarization mismatch indication and/or the physical orientation indication to match the polarization of wireless signal 108 with antenna structure 105 when signal 108 arrives at wireless receiver 102. Wireless transmitter 111 and wireless receiver 112 could operate in a similar manner.

In some examples, wireless receiver 102 determines link information for wireless communication link 103 and wireless signal 107 like received signal strength, signal-to noise ratio, and/or some other wireless communication characteristics. Wireless receiver 102 transfers the link information to wireless transmitter 101 along with the polarization information. Wireless transmitter 101 uses both the link information and the polarization information to transmit wireless communication signal 108. Wireless transmitter 101 may transfer reference signals in wireless signal 107 along with the user data. Wireless receiver 102 receives and processes the reference signals to determine Channel State Information (CSI) like received signal strength, precoding matrix index, and rank index. Wireless receiver 102 efficiently adds the polarization information to the CSI for transfer to wireless transmitter 101. Wireless transmitter 101 receives and processes the polarization information from the CSI to match polarization as described herein. Wireless transmitter 111 and wireless receiver 112 could operate in a similar manner.

In some examples, wireless transmitters 101 and 111 wirelessly communicate with wireless receivers 102 and 112 using wireless protocols like Wireless Fidelity (WIFI), Fifth Generation New Radio (5GNR), Long Term Evolution (LTE), Low-Power Wide Area Network (LP-WAN), Near-Field Communications (NFC), Code Division Multiple Access (CDMA), Frequency Division Multiple Access (FDMA), Time Division Multiple Access (TDMA), satellite data communications and/or some other wireless protocol. Wireless transmitter 101 and 111 and wireless receivers 102 and 112 comprise microprocessors, software, memories, transceivers, bus circuitry, and/or some other data processing components. The microprocessors comprise Digital Signal Processors (DSP), Central Processing Units (CPU), Graphical Processing Units (GPU), Application-Specific Integrated Circuits (ASIC), and/or some other data processing hardware. The memories comprise Random Access Memory (RAM), flash circuitry, disk drives, and/or some other type of data storage. The memories store software like operating systems, utilities, protocols, applications, and functions. The microprocessors retrieve the software from the memories and execute the software to drive the operation of data system 100 as described herein.

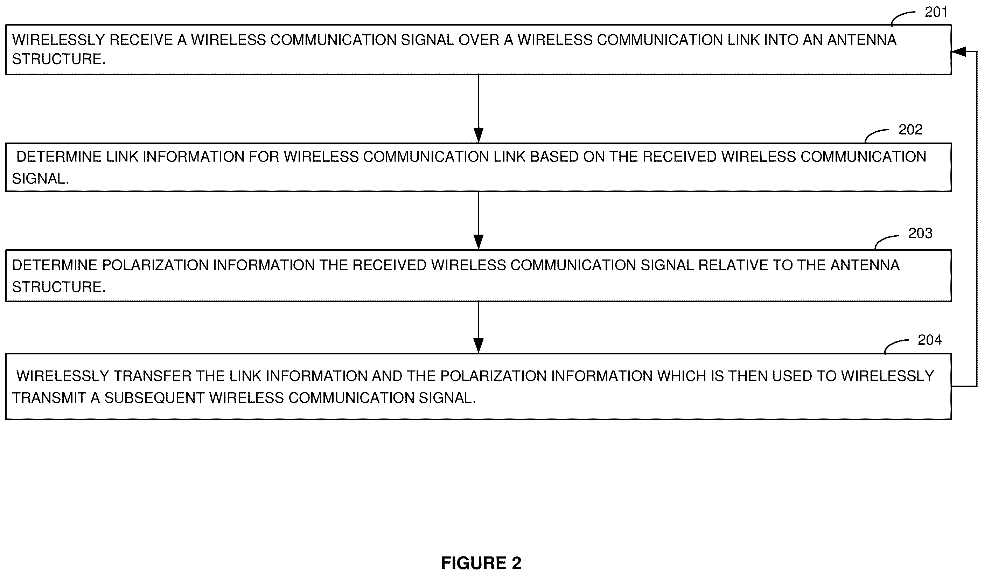

Figure 2 comprises a flow diagram that illustrates an exemplary operation of data system 100 to wirelessly communicate based on polarization information. The operation may differ in other examples. Wirelessly receive a wireless communication signal over a wireless communication link into an antenna structure (201). Determine link information for the wireless communication link based on the received wireless communication signal (202). Determine polarization information for the received wireless communication signal relative to the antenna structure (203). Wirelessly transfer the link information and the polarization information which is then used to wirelessly transmit a subsequent wireless communication signal (204). The operation repeats (201).

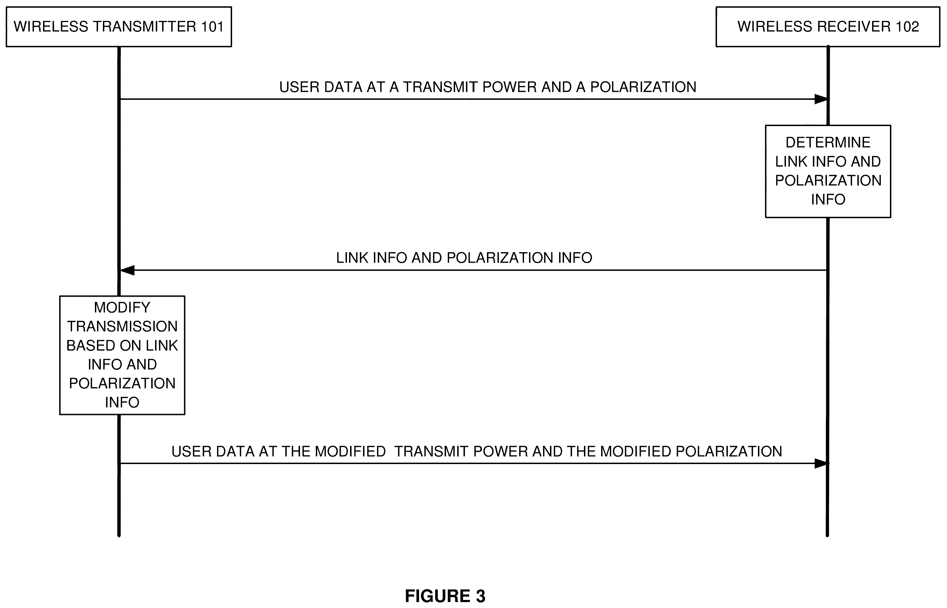

Figure 3 comprises a message sequence diagram that illustrates an exemplary operation of data system 100 to wirelessly communicate based on polarization information. The operation may differ in other examples. Wireless transmitter 101 wirelessly transmits user data to wireless receiver 102 at a transmit power and a polarization. Wireless receiver 102 determines link information like signal strength, signal-to-noise ratio, and pre-coding matrix index. Wireless receiver 102 determines its polarization information like mismatch degrees or physical orientation. Wireless receiver 102 wirelessly transfers the link information and the polarization information to wireless transmitter 101. Wireless transmitter 101 modifies its transmit power based on the link information to adequately reach wireless receiver 102 without generating undo radio interference. Wireless transmitter 101 modifies its polarization based on the polarization information to produce a polarization match at wireless receiver 102. Wireless transmitter 101 wirelessly transmits additional user data to wireless receiver 102 at the modified transmit power and the modified polarization.

Advantageously, data system 100 effectively matches the polarization of wireless transmitter 101 and wireless receiver 102. Moreover, data system 100 may efficiently transfer the polarization information from wireless receiver 101 to wireless transmitter 102 in a common feedback message like CSI.

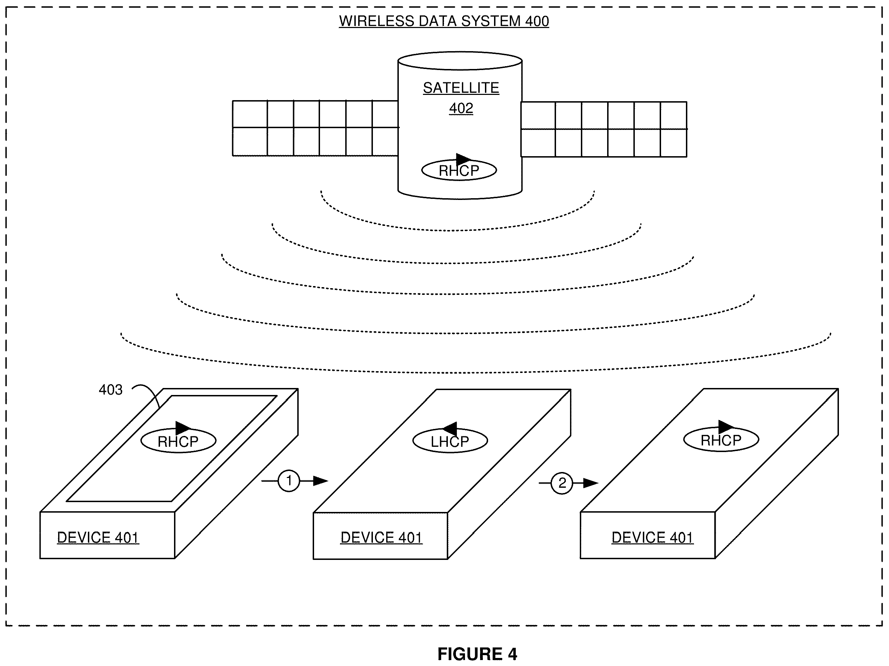

Figure 4 illustrates exemplary wireless data system 400 that comprises user communication device 401 that controls its polarization to wirelessly receive a satellite communication. Wireless data system 100 comprises user communication device 401 and communication satellite 402. User communication device 401 comprises display 403. Although user communication device 401 is depicted as a smartphone, device 401 could be a tablet, computer, vehicle, aerial drone, robot, or some other user apparatus with wireless communication components. Communication satellite 402 is in earth orbit. In some examples, user communication device 401 and communication satellite 402 may both transmit and receive wireless communication signals. In other examples, only device 401 or satellite 402 transmit wireless communication signals, while the other receives the wireless signals. The wireless communication signals are indicated on Figure 4 by the dotted lines between communication satellite 402 to user communication device 401.

User communication device 401 is shown three times on Figure 4 to depict its physical orientation and its polarization at three different times. The three different times are separated on Figure 4 by two arrows numbered one and two. At the bottom left, wireless communication device 401 is facing communication satellite 402 (display 403 is showing) and uses Right-Hand Circular Polarization (RHCP) relative to communication satellite 402. At the bottom middle, wireless communication device 401 faces away from communication satellite 402 (display 403 is not showing) and uses Left-Hand Circular Polarization (LHCP) relative to communication satellite 402. At the bottom right, wireless communication device 401 still faces away from communication satellite 402 (display 403 is not showing) but uses RHCP relative to communication satellite 402.

Initially, user communication device 401 (bottom left) and communication satellite 402 and use RHCP to transmit and receive the wireless signals. In a first transition indicated by arrow #1, user communication device 401 is turned over (bottom middle) which changes the polarization of device 401 to LHCP relative to communication satellite 402. For example, a user smartphone may flipped over so the screen is facing down. The resulting polarization mis-match significantly degrades received signal strength and leads to errors and poor communications.

User communication device 401 senses its new physical orientation. In a second transition indicated by arrow #2, user communication device 401 automatically changes its polarization back to RHCP relative to communication satellite 402 (bottom right). The polarization re-match significantly improves received signal strength and mitigates errors for better wireless communications. If user communication device 401 is flipped back over to its original physical orientation (bottom left), user communication device 401 would sense its new physical orientation and automatically change its polarization back to RHCP relative to communication satellite 402.

Thus, user communication device 401 determines its physical orientation relative to communication satellite 402 and the earth's surface and selects the type of polarization to match the polarization of signals from communication satellite 402 based on this physical orientation. User communication device 401 transmits and/or receives the wireless communication signals from communication satellite 402 using the type of polarization that matches the signals from communication satellite 402.

User communication device 401 may use an elliptical polarization instead of a circular polarization to better match the polarization of the wireless signals arriving from communication satellite 402. For example, the version of device 401 shown at the bottom right may use a Right-Hand Elliptical Polarization (RHEP) instead of the RHCP as shown on Figure 4. The elliptical polarization is typically used when user communication device 401 is tilted at an angle to satellite 402 instead of being completely flipped over as in shown in Figure 4.

In addition, user communication device 401 may determine received signal strength of the wireless communication signals from communication satellite 402. User communication device 402 synchronizes its circular or elliptical polarization with the circular polarization of communication satellite 402 based on the received signal strength of these signals. To synchronize the circular polarization, user communication device 401 times the radians and angular velocity for its circular polarization to produce the best received signal strength from communication satellite 402.

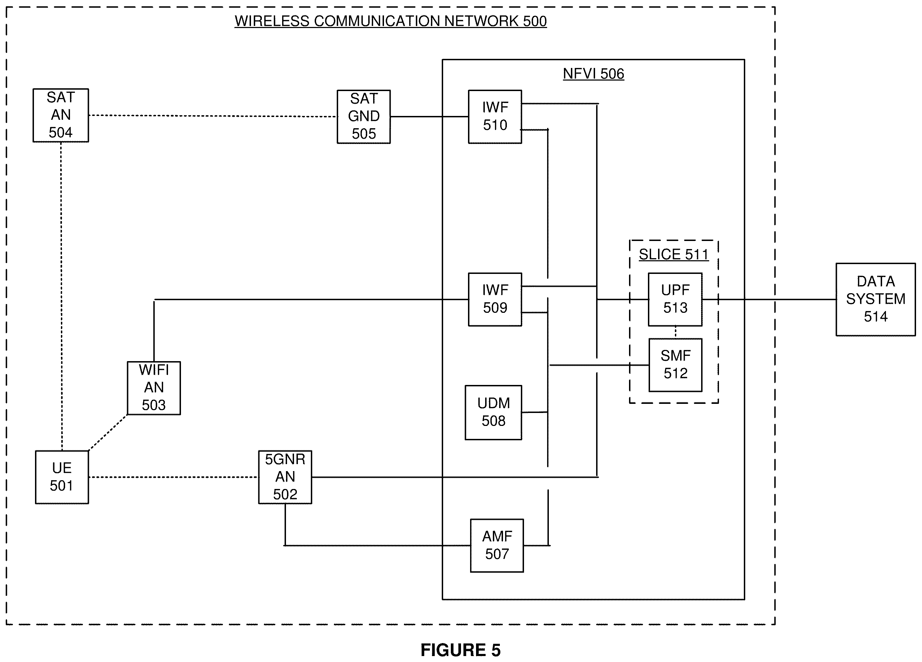

Figure 5 illustrates exemplary wireless communication network 500 to control polarization based on polarization information in Channel State Information (CSI). Wireless communication network 500 comprises an example of data systems 100 and 400, although systems 100 and 400 may differ. Wireless communication network 500 comprises User Equipment (UE) 501, Fifth Generation New Radio Access Node (5GNR AN) 502, Wireless Fidelity Access Node (WIFI AN) 503, Satellite Access Node (SAT AN) 504, Satellite Ground Station (SAT GND) 505, and Network Function Virtualization Infrastructure (NFVI) 506. NFVI 506 comprises Access and Mobility Management Function (AMF) 507, Unified Data Management (UDM) 508, Interworking Functions (IWFs) 509-510, and wireless network slice 511. Wireless network slice 511 comprises Session Management Function (SMF) 512 and User Plane Function (UPF) 513. UPF 513 is coupled to data system 514.

In a first example, UE 501 attaches to 5GNR AN 502. UE 501 registers with AMF 507 over 5GNR AN 502. AMF 507 and UDM 508 interact to perform the registration based on a subscriber profile for UE 501. The registration and subscriber profile indicate network slice 509 for UE 501. AMF 507 and SMF 512 interact to develop context for UE 501 like network addresses and quality-of-service. SMF 512 transfers the context for UE 501 to UPF 513. AMF 507 transfers the context for UE 501 to 5GNR AN 502. AMF 507 transfers the context for UE 501 to UE 501 over 5GNR AN 502. Based on the context, UE 501 and data system 514 exchange user data over 5GNR AN 502 and UPF 513.

5GNR AN 502 transfers downlink reference signals to UE 501 along with the user data. UE 501 processes the downlink reference signals to generate the CSI which typically indicates strength, power, quality, interference, and noise for the received downlink signal. The CSI also indicates a Precoding Matrix Index (PMI), Rank Index (RI), and polarization information for UE 501. The polarization information indicates the polarization mismatch between the arriving downlink signal and the antenna elements in UE 501. The polarization mismatch could be the type of polarization and the angle between the polarization of the arriving signal and the polarization of UE 501. UE 501 transfers the CSI including the downlink polarization information to 5GNR AN 502.

UE 501 transfers uplink reference signals to 5GNR AN 502 along with the user data. 5GNR AN 502 processes the reference signals to determine uplink transmit power and polarization information for subsequent uplink signals. The polarization information indicates the polarization mismatch between the arriving uplink signal and the antenna elements in 5GNR AN 502. The polarization mismatch could be the type of polarization and the angle between the polarization of the arriving signal and the polarization of 5GNR AN 502. 5GNR AN 502 transfers the uplink transmit power including the uplink polarization information to UE 501. 5GNR AN 502 processes the CSI and downlink polarization information from UE 501 to beamform and transmit downlink signals to UE 501 that match the polarization of UE 501. UE 501 processes the uplink transmit power and uplink polarization information from 5GNR AN 502 to transmit uplink signals to 5GNR AN 502 that match the polarization of 5GNR AN 502. UE 501 and data system 514 exchange user data over 5GNR AN 502 and UPF 513. UE 501 and 5GNR AN 502 also exchange additional reference signals along with this user data.

In a second example, UE 501 attaches to WIFI AN 503. UE 501 registers with AMF 507 over WIFI AN 503 and IWF 509. AMF 507 and UDM 508 interact to perform the registration based on a subscriber profile for UE 501. The registration and subscriber profile indicate network slice 509 for UE 501. AMF 507 and SMF 512 interact to develop context for UE 501 like network addresses and quality-of-service. SMF 512 transfers the context for UE 501 to UPF 513. AMF 507 transfers the context for UE 501 to IWF 509. AMF 507 transfers the context for UE 501 to UE 501 over WIFI AN 503 and IWF 509. Based on the context, UE 501 and data system 514 exchange user data over WIFI AN 503, IWF 509, and UPF 513. UE 501 transfers downlink polarization information to WIFI AN 503 along with the user data. The downlink polarization information indicates the polarization mismatch between the arriving downlink signal and the antenna elements in UE 501. The polarization mismatch could be the type of polarization and the angle between the polarization of the arriving signal and the polarization of UE 501. WIFI AN 503 transfers uplink polarization information to UE 501 along with the user data. The uplink polarization information indicates the polarization mismatch between the arriving uplink signals and the antenna elements in WIFI AN 503. The polarization mismatch could be the type of polarization and the angle between the polarization of the arriving signal and the polarization of WIFI AN 503. WIFI AN 503 processes the downlink polarization information from UE 501 to transmit downlink signals to UE 501 that match the polarization of UE 501. UE 501 processes the uplink polarization information from WIFI AN 503 to transmit uplink signals to WIFI AN 503 that match the polarization of WIFI AN 503. UE 501 and data system 514 exchange user data over WIFI AN 503, IWF 509, and UPF 513.

In a third example, UE 501 attaches to SAT AN 504. UE 501 registers with AMF 507 over SAT AN 504, SAT GND 505, and IWF 510. AMF 507 and UDM 508 interact to perform the registration based on a subscriber profile for UE 501. The registration and subscriber profile indicate network slice 509 for UE 501. AMF 507 and SMF 512 interact to develop context for UE 501 like network addresses and quality-of-service. SMF 512 transfers the context for UE 501 to UPF 513. AMF 507 transfers the context for UE 501 to IWF 510. AMF 507 transfers the context for UE 501 to UE 501 over IWF 510, SAT GND 505, and SAT AN 504. Based on the context, UE 501 and data system 514 exchange user data over SAT AN 504, SAT GND 505, IWF 510, and UPF 513. UE 501 transfers downlink polarization information to SAT AN 504 along with the user data. The downlink polarization information indicates the polarization mismatch between the arriving downlink signals and the antenna elements in UE 501. The polarization mismatch could be the type of polarization and the angle between the polarization of the arriving signal and the polarization of UE 501. SAT AN 504 processes the downlink polarization information from UE 501 to transmit downlink signals that will match the polarization of UE 501. SAT AN 504 transfers uplink polarization information to UE 501 along with the user data. The uplink polarization information indicates the polarization mismatch between the arriving uplink signals and the antenna elements in SAT AN 504. The polarization mismatch could be the type of polarization and the angle between the polarization of the arriving signal and the polarization of SAT AN 504. UE 501 processes the uplink polarization information from satellite AN 504 to transmits uplink signals that will match the polarization of SAT AN 504. UE 501 and data system 514 exchange user data over SAT AN 504, SAT GND 505, IWF 510, and UPF 513.

In a fourth example, UE 501 determines its own physical orientation relative to SAT AN 504 and/or the earth's surface. UE 501 determines an elliptical polarization to match the polarization of SAT AN 504 based on its own physical orientation. For example, UE 501 and SAT AN 504 may use right-hand circular polarization when UE 501 is facing SAT AN 504, but UE 501 may switch to right-hand elliptical polarization when UE 501 is tilted in order to match the polarization of the signals from SAT AN 504.

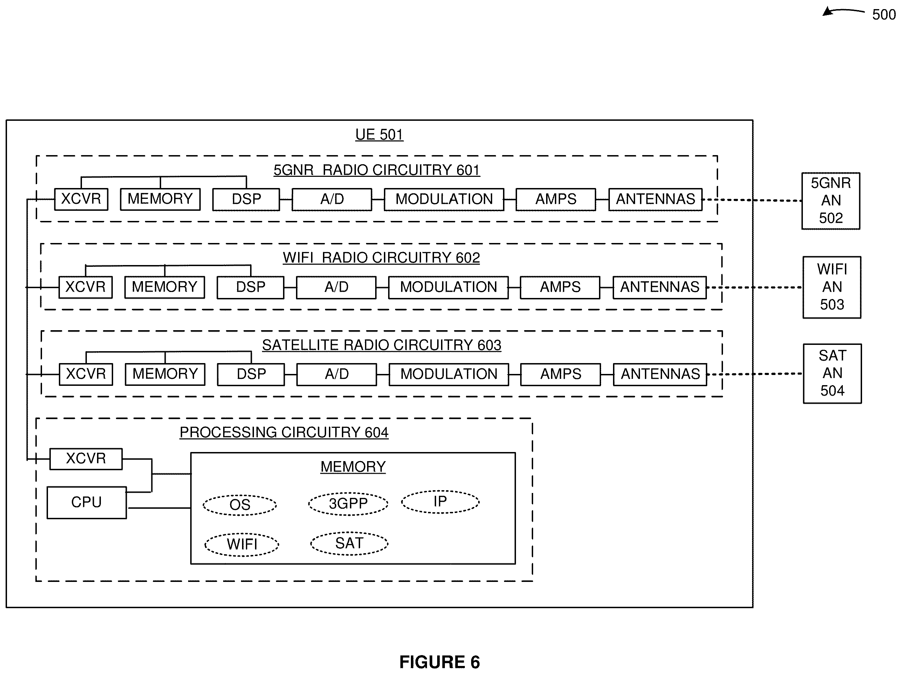

Figure 6 illustrates exemplary UE 501 in wireless communication network 500 that controls polarization based on the polarization information in the CSI. UE 501 comprises an example of wireless transmitter 101, wireless receiver 102, and user communication device 401, although transmitter 101, receiver 102, and device 401 may differ. UE 501 comprises Fifth Generation New Radio (5GNR) radio circuitry 601, Wireless Fidelity (WIFI) radio circuitry 602, satellite radio circuitry 603, and processing circuitry 604. Radio circuitry 601-603 comprises antennas, amplifiers, filters, modulation, analog-to-digital interfaces, DSPs, memories, and transceivers (XCVRs) that are coupled over bus circuitry. Processing circuitry 604 comprises one or more CPUs, one or more memories, and one or more transceivers that are coupled over bus circuitry. The one or more memories in processing circuitry 604 store software like an Operating System (OS), 3GPP Application (3GPP), WIFI Application (WIFI), Satellite Application (SAT), and Internet Protocol Application (IP). The antennas in radio circuitry 601-603 exchange wireless signals with ANs 502-504. Transceivers in radio circuitry 601-603 are coupled to transceivers in processing circuitry 604. In processing circuitry 604, the one or more CPUs retrieve the software from the one or more memories and execute the software to direct the operation of UE 501 as described herein.

In some examples, the 3GPP application in UE 501 configures the antennas in 5GNR radio circuitry 601 to match the polarization at 5GNR AN 502 for uplink transmissions based on polarization information from 5GNR AN 502. The 3GPP application transfers polarization information for the antennas in 5GNR radio circuitry 601 to 5GNR AN 502 in the CSI. The WIFI application in UE 501 configures the antennas in WIFI radio circuitry 602 to match the polarization at WIFI AN 503 for uplink transmissions based on polarization information from WIFI AN 503. The WIFI application in UE 501 transfers polarization information for the antennas in WIFI radio circuitry 602 to WIFI AN 503. The SAT application in UE 501 configures the antennas in satellite radio circuitry 603 to match the polarization at SAT AN 504 for uplink transmissions based on polarization information from SAT AN 504. The SAT application in UE 501 transfers polarization information for the antennas in SAT radio circuitry 603 to SAT AN 504.

In some examples, the SAT application in UE 501 determines the physical orientation of the antennas in SAT radio circuitry 603 like their angle and geographic direction relative to SAT AN 504 and/or the earth's surface. The SAT application in UE 501 selects a type of elliptical polarization to match the polarization of signals from SAT AN 504 based on its own physical orientation. For example, UE 501 and SAT AN 504 may use right-hand polarization when UE 501 faces SAT AN 504. The SAT application switches to right-hand elliptical polarization when UE 501 is tilted to match the right-hand circular polarization of SAT AN 504.

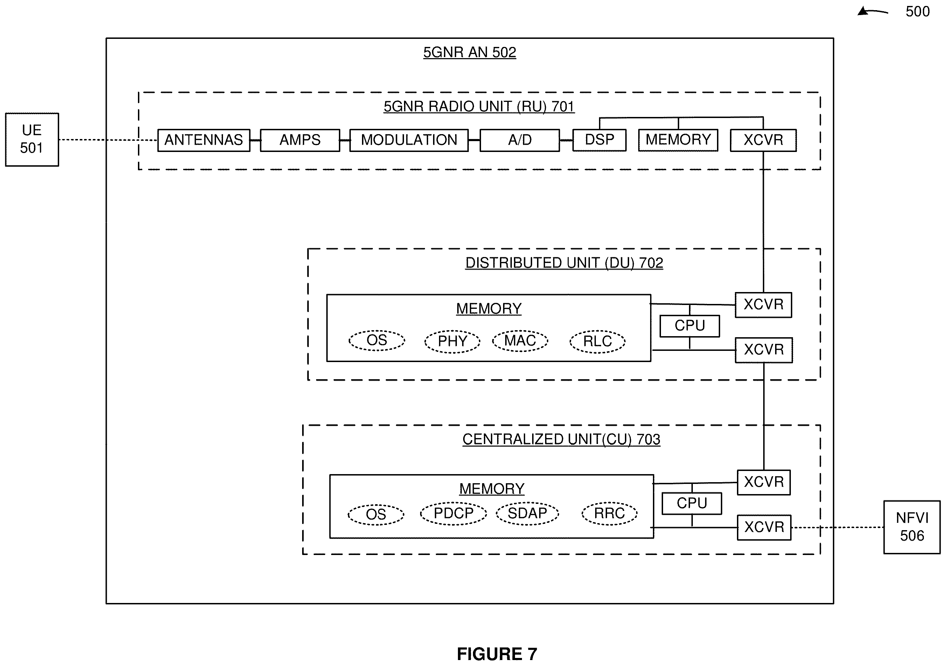

Figure 7 illustrates exemplary 5GNR AN 502 in wireless communication network 500 that controls polarization based on the polarization information in the CSI. 5GNR AN 502 comprises an example of wireless transmitter 101 and wireless receiver 102, although transmitter 101 and receiver 102 may differ. 5GNR AN 502 comprises 5GNR Radio Unit (RU) 701, Distributed Unit (DU) 702, and Centralized Unit (CU) 703. 5GNR RU 701 comprises antennas, amplifiers, filters, modulation, analog-to-digital interfaces, DSP, memory, radio applications, and transceivers that are coupled over bus circuitry. DU 702 comprises memory, CPU, and transceivers that are coupled over bus circuitry. The memory in DU 702 stores operating system and 5GNR network applications for Physical Layer (PHY), Media Access Control (MAC), and Radio Link Control (RLC). CU 703 comprises memory, CPU, and transceivers that are coupled over bus circuitry. The memory in CU 703 stores an operating system and 5GNR network applications for Packet Data Convergence Protocol (PDCP), Service Data Adaption Protocol (SDAP), Radio Resource Control (RRC), and power control (PWR). The antennas in 5GNR RU 701 are wirelessly coupled to UEs 501 over 5GNR links. Transceivers in 5GNR RU 701 are coupled to transceivers in DU 702. Transceivers in DU 702 are coupled to transceivers in CU 703. Transceivers in CU 703 are coupled to transceivers in NFVI 506. The DSP and CPU in RU 701, DU 702, and CU 703 execute the radio applications, operating systems, and network applications to exchange data and signaling between UE 501 and NFVI 506 as described herein.

In some examples, the RRC, PHY, and DSP configure the antennas in 5GNR RU 701 to match the polarization at UE 501 for downlink transmissions based on polarization information in the CSI from UE 501. The RRC receives the polarization information for UE 501 in the CSI from UE 501 and directs the PHY to use the appropriate downlink polarization for UE 501. The PHY precodes user data for the downlink polarization and directs the DSP to configure the antennas in 5GNR RU 701 for the downlink polarization. The RRC also transfers uplink polarization information for the antennas in 5GNR RU 701 to UE 501 along with the uplink transmit power. UE 501 uses the uplink polarization to match the polarization at 5GNR AN 502.

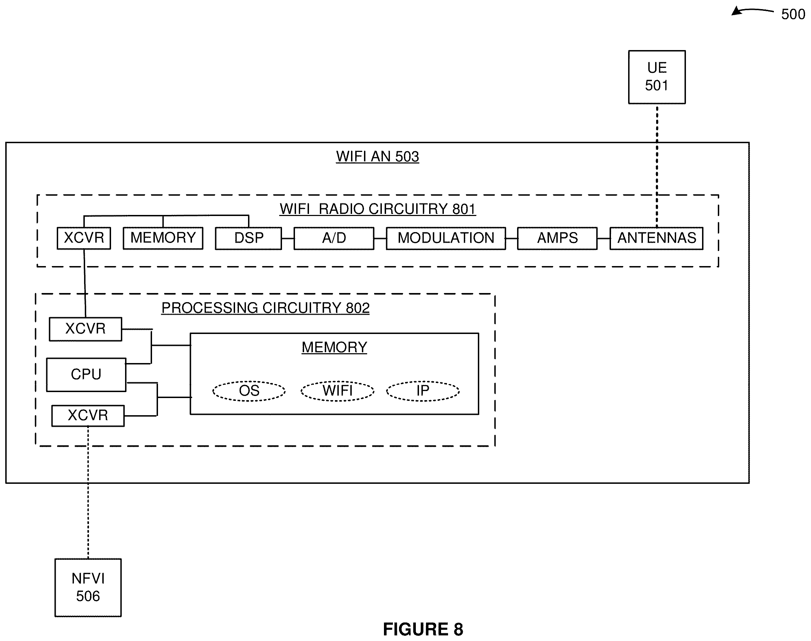

Figure 8 illustrates an exemplary Wireless Fidelity (WIFI) AN 403 in wireless communication network 500 that controls polarization based on polarization information. WIFI AN 503 comprises an example of wireless transmitter 101 and wireless receiver 102, although transmitter 101 and receiver 102 may differ. WIFI AN 503 comprises WIFI radio circuitry 801 and processing circuitry 802. WIFI radio circuitry 801 comprises antennas, amplifiers, filters, modulation, analog-to-digital interfaces, DSPs, memories, and transceivers that are coupled over bus circuitry. Processing circuitry 802 comprises one or more CPUs, one or more memories, and one or more transceivers that are coupled over bus circuitry. The one or more memories in processing circuitry 802 store software like an Operating System (OS), WIFI application (WIFI), and IP application (IP). The antennas in WIFI radio circuitry 801 exchange WIFI signals with UE 501. Transceivers in WIFI radio circuitry 801 are coupled to transceivers in processing circuitry 802. Transceivers in processing circuitry 802 are coupled to transceivers in NFVI 506. In processing circuitry 802, the one or more CPUs retrieve the software from the one or more memories and execute the software to exchange data and signaling between UE 501 and NFVI 506 as described herein.

In some examples, the WIFI application in WIFI AN 503 configures the antennas in WIFI radio circuitry 801 to match the polarization at UE 501 for downlink transmissions based on polarization information from UE 501. The WIFI application in WIFI AN 503 transfers uplink polarization information for the antennas in WIFI radio circuitry 801 to UE 501. UE 501 uses the uplink polarization as directed to match the uplink polarization at WIFI AN 503.

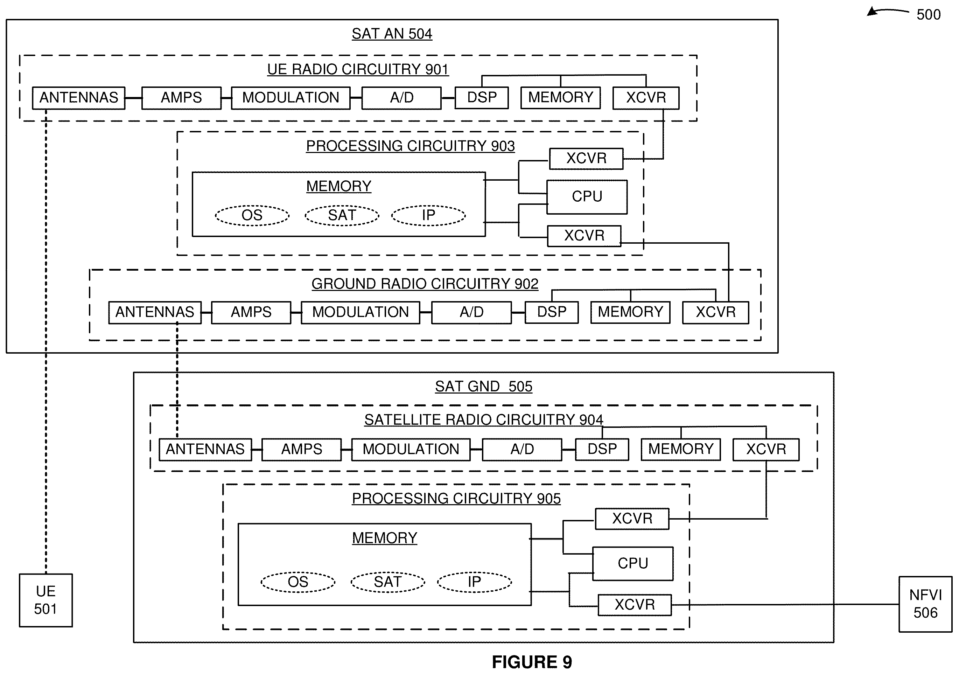

Figure 9 illustrates exemplary Satellite (SAT) AN 504 and SAT Ground Station (GND) 505 in wireless communication network 500 that controls polarization based on polarization information. SAT AN 504 and SAT GND 505 comprises an example of wireless transmitter 101 and wireless receiver 102, although transmitter 101 and receiver 102 may differ. SAT AN 504 comprises UE radio 901, ground radio 902, and processing circuitry 903. SAT GND 505 comprises satellite radio circuitry 904 and processing circuitry 905. Radio circuitry 901-902 and 904 comprise antennas, amplifiers, filters, modulation, analog-to-digital interfaces, DSPs, memories, transceivers, and power supplies that are coupled over bus circuitry. Processing circuitry 903 and 905 comprise one or more CPUs, one or more memories, and one or more transceivers that are coupled over bus circuitry. The one or more memories in processing circuitry 903 and 905 store software like an Operating System (OS), Satellite Application (SAT), and IP Application (IP). The antennas in UE radio circuitry 901 exchange satellite signals with UE 501. Transceivers in UE radio circuitry 901 are coupled to transceivers in processing circuitry 903. Transceivers in processing circuitry 903 are coupled to transceivers in ground radio circuitry 902. The antennas in ground radio circuitry 902 exchange satellite signals with antennas in satellite radio circuitry 904, and the antennas in satellite radio circuitry 904 exchange the satellite signals with ground radio circuitry 902. Transceivers in satellite radio circuitry 904 are coupled to transceivers in processing circuitry 905. Transceivers in processing circuitry 905 are coupled to transceivers in NFVI 506. In processing circuitry 903 and 905, the one or more CPUs retrieve the software from the one or more memories and execute the software to exchange data and signaling between UEs 501 and NFVI 506 as described herein.

In some examples, the SAT application in SAT AN 504 configures the antennas in satellite radio circuitry 901 to match the polarization at UE 501 for downlink transmissions based on polarization information from UE 501. The SAT application in SAT AN 504 transfers uplink polarization information for the antennas in satellite radio circuitry 901 to UE 501. UE 501 uses the uplink polarization to match the uplink polarization at SAT AN 502.

In some examples, satellite radio circuitry 901 uses right-hand circular polarization. UE 501 matches the polarization of signals from SAT AN 504 based on its own physical orientation. For example, UE 501 and SAT AN 504 may use right-hand polarization when UE 501 is facing SAT AN 504. UE 501 switches to left-hand polarization when UE 501 is turned over and faces the ground in order to match the right-hand polarization of SAT AN 504. UE 501 switches to right-hand elliptical polarization when UE 501 is tilted in order to match the right-hand polarization of signals from SAT AN 504.

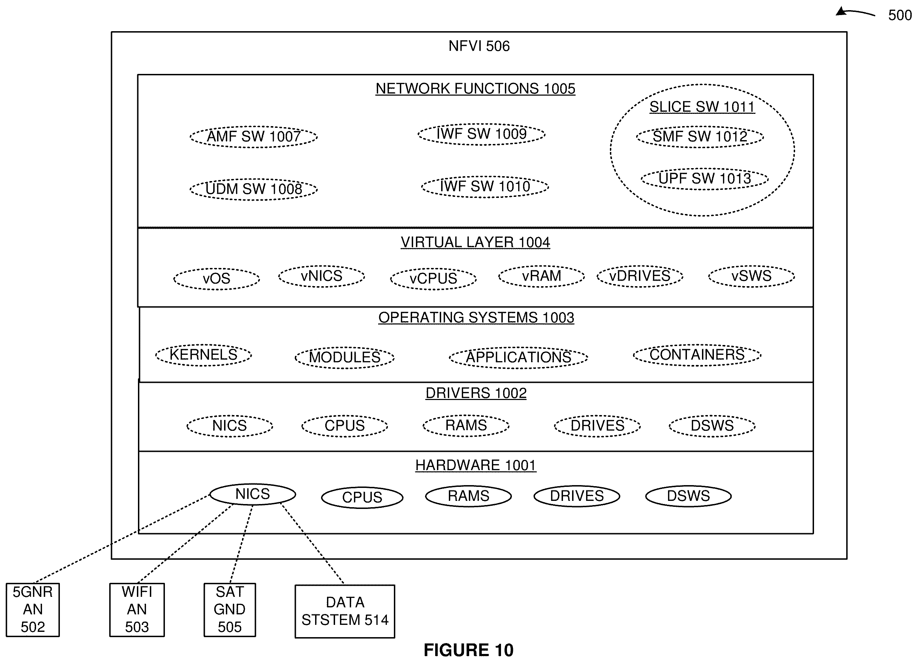

Figure 10 illustrates exemplary Network Function Virtualization Infrastructure (NFVI) 506 in wireless communication network 500 that controls polarization by including the polarization information in the CSI. NFVI 506 comprises an example of wireless transmitter 101 and wireless receiver 102, although transmitter 101 and receiver 102 may differ. NFVI 506 comprises hardware 1001, hardware drivers 1002, operating systems 1003, virtual layer 1004, and network functions 1005. Hardware 1001 comprises Network Interface Cards (NICS), TPMs, CPUs, RAM, Flash/Disk Drives (DRIVES), and Data Switches (DSWS). Hardware drivers 1002 comprise software that is resident in the NICS, TPMs, CPUs, RAM, DRIVES, and DSWS. Operating systems 1003 comprise kernels, modules, applications, and containers. Virtual layer 1004 comprises virtual Operating Systems (vOS), vNICS, vCPUS, vRAM, vDRIVES, and vSWS. Network Functions 1005 comprises AMF SW 1007, UDM SW 1008, IWF SW 1009-1010, and slice SW 1011. Slice SW 1011 comprises SMF SW 1012 and UPF SW 1013. The NICS in hardware 1001 are coupled to ANs 502-503, SAT GND 505, and data system 514. Hardware 1001 executes hardware drivers 1002, operating systems 1003, virtual layer 1004, and network functions 1005 to form and operate AMF 507, UDM 508, IWFs 509-510, slice 511, SMF 512, and UPF 513 as described herein. NFVI 506 may be located at a single site or be distributed across multiple geographic areas.

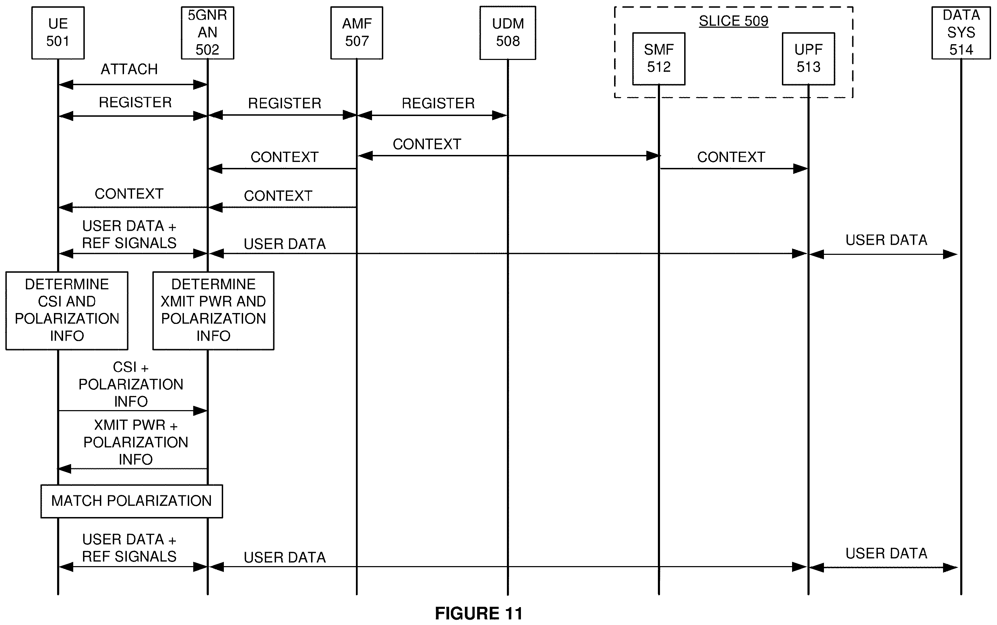

Figure 11 illustrates an exemplary operation of wireless communication network 500 to control polarization by including the polarization information in the CSI. The operation may vary in other examples. UE 501 attaches to 5GNR AN 502. UE 501 registers with AMF 507 over 5GNR AN 502. AMF 507 and UDM 508 interact to perform the registration based on a subscriber profile for UE 501. The registration and subscriber profile indicate network slice 509 for UE 501. AMF 507 and SMF 512 interact to develop context for UE 501 like network addresses and quality-of-service. SMF 512 transfers the context for UE 501 to UPF 513. AMF 507 transfers the context for UE 501 to 5GNR AN 502. AMF 507 transfers the context for UE 501 to UE 501 over 5GNR AN 502. Based on the context, UE 501 and data system (DATA SYS) 514 exchange user data over 5GNR AN 502 and UPF 513.

5GNR AN 502 transfers downlink reference signals to UE 501 along with the user data. UE 501 processes the downlink reference signals to generate the CSI which typically indicates power, quality, interference, and noise for the received downlink signal. The CSI also indicates Precoding Matrix Index (PMI), Rank Index (RI), and polarization information for UE 501. The polarization information indicates the polarization mismatch between arriving downlink signals and the antenna elements in UE 501. The polarization mismatch could be the type of polarization and the angle between the polarization of the arriving signal and the polarization of UE 501. UE 501 transfers the CSI including the polarization information to 5GNR AN 502.

UE 501 transfers uplink reference signals to 5GNR AN 502 along with the user data. 5GNR AN 502 processes the reference signals to determine uplink transmit power and polarization information for subsequent uplink signals. The polarization information indicates the polarization mismatch between the arriving uplink signals and the antenna elements in 5GNR AN 502. The polarization mismatch could be the type of polarization and the angle between the polarization of the arriving signal and the polarization of 5GNR AN 502. 5GNR AN 502 transfers the uplink transmit power including the polarization information to UE 501. 5GNR AN 502 processes the CSI and polarization information from UE 501 to beamform and transmit downlink signals to UE 501 that match the polarization at UE 501. UE 501 processes the uplink transmit power and polarization information from 5GNR AN 502 to transmit uplink signals to 5GNR AN 502 that match the polarization at 5GNR AN 502. UE 501 and data system 514 exchange user data over 5GNR AN 502 and UPF 513. UE 501 and 5GNR AN 502 also exchange additional reference signals along with this user data.

Advantageously, wireless communication network 500 effectively matches the polarization of UE 501 and ANs 502-504. Moreover, wireless communication network 500 may efficiently transfer the polarization information from UE 501 to 5GNR AN 501 in a common feedback message like CSI.

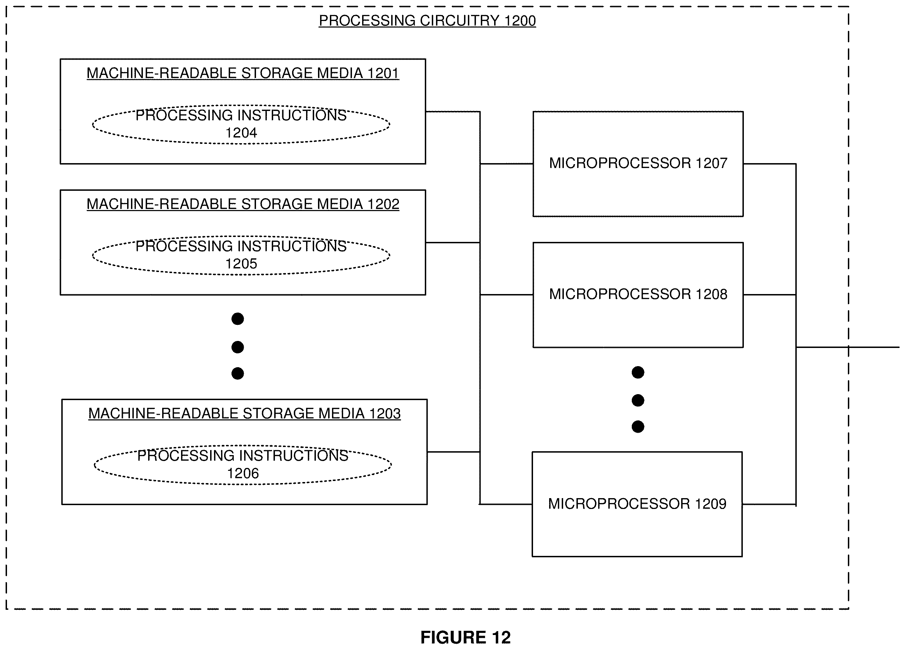

Figure 12 illustrates exemplary processing circuitry 1200 to control polarization using polarization information. Processing circuitry 1200 comprises an example of data system 100, wireless data system 400, and wireless communication network 500, although system 100, system 400, and network 500 may differ. Processing circuitry 1200 comprises machine-readable storage media 1201-1203 and microprocessors 1207-1209 that are communicatively coupled. Machine-readable storage media 1201-1203 store processing instructions 1204-1206 in a non-transitory manner. Microprocessors 1207-1209 comprise DSPs, CPUs, GPUs, ASICs, and/or some other data processing hardware. Machine-readable storage media 1201-1203 comprises RAM, flash circuitry, disk drives, and/or some other type of data storage apparatus. Microprocessors 1207-1209 retrieve processing instructions 1204-1206 from non-transitory machine-readable storage media 1201-1203. Microprocessors 1207-1209 execute processing instructions 1204-1206 to transfer polarization information and/or match polarization as described above. The amount of storage media, microprocessors, processing instructions that are shown in Figure 12 may vary in other examples.

The wireless communication system circuitry described above comprises computer hardware and software that form special-purpose data communication circuitry to control polarization based on polarization information. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose data communication circuitry to control polarization based on polarization information.

The included descriptions and figures depict specific embodiments to teach those skilled in the art how to make and use the best mode. For the purpose of teaching inventive principles, some conventional aspects have been simplified or omitted. Those skilled in the art will appreciate variations from these embodiments that fall within the scope of the disclosure. Those skilled in the art will also appreciate that the features described above may be combined in various ways to form multiple embodiments. As a result, the invention is not limited to the specific embodiments described above, but only by the claims and their equivalents.

Although the descriptions provided herein may be in the context of certain radio access technologies, networks, and network topologies, such as 5G/NR mobile communications, the proposed concepts, schemes, and any variations thereof may be implemented in, for and by other types of radio access technologies, networks, and network topologies. Such radio access technologies, networks, and network topologies may include, for example and without limitation, Long-Term Evolution (LTE), Internet-of-Things (IoT), Narrow Band Internet of Things (NB-IoT), vehicle-to-everything (V2X), fixed wireless internet, and non-terrestrial network (NTN) communications. Thus, the scope of the disclosure is not limited to the examples described herein.

## Claims

1. A method comprising:
wirelessly receiving a wireless communication signal from a wireless transmitter over a wireless communication link into an antenna structure;
determining link information for the wireless communication link based on the wireless communication signal;
determining polarization information for the antenna structure based on the wireless communication signal; and
wirelessly transferring the link information and the polarization information to the wireless transmitter, wherein the wireless transmitter uses link information and the polarization information to wirelessly transmit a subsequent wireless communication signal over the wireless communication link to the antenna structure.

2. The method of claim 1 wherein:
determining the polarization information for the antenna structure comprises determining a physical orientation for the antenna structure; and
wirelessly transferring the polarization information to the wireless transmitter comprises indicating the physical orientation for the antenna structure to the wireless transmitter, wherein the wireless transmitter uses a transmit polarization that is based on the physical orientation for the antenna structure.

3. The method of claim 1 wherein:
determining the polarization information for the antenna structure comprises determining a circular polarization for the antenna structure; and
wirelessly transferring the polarization information to the wireless transmitter comprises indicating the circular polarization for the antenna structure to the wireless transmitter, wherein the wireless transmitter uses a transmit polarization that is based on the circular polarization for the antenna structure.

4. The method of claim 1 wherein:
wirelessly receiving the wireless communication signal comprises wirelessly receiving user data and reference signals;
determining link information comprises determining Channel State Information (CSI) information based on the reference signals; and
wirelessly transferring the link information and the polarization information to the wireless transmitter comprises adding the polarization information to the CSI and transmitting the CSI to the wireless transmitter.

5. The method of claim 1 wherein:
wirelessly receiving the wireless communication signal comprises wirelessly receiving user data and reference signals;
determining link information comprises determining a Pre-coding Matrix Index (PMI) based on the reference signals; and
wirelessly transferring the link information and the polarization information to the wireless transmitter comprises adding the polarization information to the PMI and transmitting the PMI to the wireless transmitter.

6. The method of claim 1 wherein:
wirelessly receiving the wireless communication signal from the wireless transmitter comprises wirelessly receiving the wireless communication signal from a communication satellite in earth orbit;
wirelessly transferring the link information and the polarization information to the wireless transmitter comprises wirelessly transferring the link information and the polarization information to the communication satellite in earth orbit, wherein the communication satellite in earth orbit uses link information and the polarization information to wirelessly transmit the subsequent wireless communication signal over the wireless communication link to the antenna structure.

7. The method of claim 1 wherein:
wirelessly receiving the wireless communication signal from the wireless transmitter comprises wirelessly receiving the wireless communication signal from a wireless user device;
wirelessly transferring the link information and the polarization information to the wireless transmitter comprises wirelessly transferring the link information and the polarization information to the wireless user device, wherein the wireless user device uses link information and the polarization information to wirelessly transmit the subsequent wireless communication signal over the wireless communication link to the antenna structure.

8. The method of claim 1 wherein:
wirelessly receiving the wireless communication signal comprises receiving an optical signal;
determining the link information based on the wireless communication signal comprises determining the link information based on the optical signal; and
wherein the wireless transmitter uses link information and the polarization information to wirelessly transmit a subsequent optical signal to the antenna structure.

9. A wireless communication system comprising:
a wireless transmitter to transmit a wireless communication signal over a wireless communication link to a wireless receiver;
the wireless receiver to receive the wireless communication signal over the wireless communication link from the wireless receiver;
the wireless receiver to determine link information for the wireless communication link based on the wireless communication signal;
the wireless receiver to determine polarization information for the wireless receiver based on the wireless communication signal;
the wireless receiver to wirelessly transfer the link information and the polarization information to the wireless transmitter;
the wireless transmitter to wirelessly receive the link information and the polarization information from the wireless receiver; and
the wireless transmitter to transmit a subsequent wireless communication signal over the wireless communication link to the wireless receiver based on the link information and the polarization information.

10. The wireless communication system of claim 9 wherein the polarization information indicates a physical orientation relative to earth's surface of one or more antennas in the wireless receiver.

11. The wireless communication system of claim 9 wherein:
the wireless communication signal includes reference signals;
the wireless receiver is to determine Channel State Information (CSI) information based on the reference signals to determine the link information; and
the wireless receiver is to add the polarization information to the CSI to wirelessly transfer the link information and the polarization information to the wireless transmitter in the CSI.

12. The wireless communication system of claim 9 wherein:
the wireless communication signal includes reference signals;
the wireless receiver is to determine a Precoding Matrix Index (PMI) based on the reference signals to determine the link information; and
the wireless receiver is to add the polarization information to the (PMI) to wirelessly transfer the link information and the polarization information to the wireless transmitter.

13. The wireless communication system of claim 9 wherein that wireless transmitter comprises a communication satellite in earth orbit.

14. The wireless communication system of claim 9 wherein the wireless transmitter comprises a wireless user device.

15. The wireless communication system of claim 9 wherein:
the wireless transmitter comprises a communication satellite in earth orbit; and
the wireless receiver comprises one of a robot or a vehicle.
